(19) Europäisches Patentamt
European Patent Office
Office européen des brevets

(11) **EP 2 239 598 B1**

(12) **EUROPÄISCHE PATENTSCHRIFT**

(45) Veröffentlichungstag und Bekanntmachung des Hinweises auf die Patenterteilung:
**21.11.2012 Patentblatt 2012/47**

(51) Int Cl.:
***G01S 19/20*** *(2010.01)*

(21) Anmeldenummer: **10003402.4**

(22) Anmeldetag: **30.03.2010**

(54) **Verfahren und Vorrichtung zur Abschätzung des Integritätsrisikos in einem Satellitennavigationssystem**

Device and method for estimating the integrity risk in a satellite navigation system

Procédé et dispositif de d'évaluation du risque pour l'intégrité dans un système de navigation par satellite

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.04.2009 DE 102009016337**

(43) Veröffentlichungstag der Anmeldung:
**13.10.2010 Patentblatt 2010/41**

(73) Patentinhaber: **Astrium GmbH 82024 Taufkirchen (DE)**

(72) Erfinder:
• **Krüger, Jan M.W., Dr. 80807 München (DE)**
• **Trautenberg, Hans L.,Dr. 85521 Ottobrunn (DE)**

(74) Vertreter: **Avenhaus, Beate EADS Deutschland GmbH Patentabteilung 81663 München (DE)**

(56) Entgegenhaltungen:
**EP-A1- 2 017 636**

• **OEHLER V ET AL: "The Galileo Integrity Concept" ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 604-615, XP002375520**

**Beschreibung**

Die Erfindung betrifft ein Verfahren und eine Vorrichtung zur Abschätzung des Integritätsrisikos in einem Satellitennavigationssystem gemäß Anspruch 1 bzw. 7.

Satellitensysteme zur weltweiten Navigation (GNSS; GNSS = Global Navigation Satellite System, kurz Satellitennavigationssystem) werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System (Raumsegment), ein mit einer zentralen Berechnungsstation verbundenes erdfestes Empfangseinrichtungs-System (Bodensegment), das mehrere Bodenstationen sowie Galileo-Sensorstationen (GSS) umfasst, sowie Nutzungssysteme auf, welche die von den Satelliten per Funk übermittelten Satellitensignale insbesondere zur Navigation auswerten und nutzen. Vom Raumsegment aus sendet jeder Satellit ein den Satelliten charakterisierenden Signal, das Signal-In-Space (SIS) aus. Das SIS umfasst insbesondere Informationen zum Orbit des Satelliten und einen Zeitstempel des Aussendezeitpunkts, die zur Detektion der Position eines Nutzers bzw. Nutzungssystems genutzt werden.

Eine genaue Detektion der Position eines Nutzers erfordert bei einem GNSS Integrität. Integrität bedeutet insbesondere, dass einerseits das GNSS imstande ist, einen Nutzer innerhalb einer bestimmten Zeitspanne zu warnen, wenn Teile des GNSS nicht für die Navigation benutzt werden sollen, beispielsweise bei Ausfall von Systemkomponenten, und dass andererseits der Nutzer den Navigationsdaten, die er über Satellitennavigationssignale von den Satelliten des GNSS erhält, vertrauen kann, insbesondere sich auf die Genauigkeit der empfangenen Navigationsdaten verlassen kann.

Beim Integritätskonzept von Galileo ist vorgesehen, dass an Nutzungssysteme folgende Informationen mittels der Navigationssignale übertragen werden:

- Informationen über die Genauigkeit des gesendeten Navigationssignals für jeden Satelliten, d.h. eine Signal-In-Space-Accuracy (SISA) von Satelliten als Qualitätsmaß für ein SIS eines Satelliten;

- Statusmeldungen zur Genauigkeit der Satellitenüberwachung durch das Bodensegment, d.h. eine Signal-In-Space-Monitoring-Accuracy (SISMA) für jeden Satelliten; und

- ein Integritätssignal in Form einer einfachen Fehleranzeige für ein fehlerhaftes SIS eines Satelliten "Not OK" (das sogenannte Integrity Flag IF) und der Schwellwert für die Meldung, dass der Fehler eines SIS eines Satelliten nicht mehr akzeptabel ist, der auch als IF Threshold bezeichnet wird.

Diese Informationen versetzen ein Nutzungssystem in die Lage, die Integrität und das Integritätsrisiko selbst zu quantifizieren und zu bewerten.

Bei Galileo werden die SIS der Satelliten innerhalb des Bodensegments durch Auswertung der Messungen von den einzelnen Galileo-Sensorstationen (GSS) überwacht. Die Messungen des GSS werden in einer zentralen Integritätsprozessierungsstelle des Bodensegments verarbeitet, um die an die Nutzungssysteme zu verteilenden und oben aufgelisteten Integritätsinformationen zu ermitteln.

Mithilfe der bekannten Positionen der GSS in der Integritätsprozessierungsstelle werden die aktuelle Position, die augenblickliche Ablage der verbreiteten Zeitskala von der Systemzeitskala und die Signaleigenschaften eines Satelliten und damit der maximale Fehler des Satelliten bzw. des von ihm ausgesandten Signals im Raum, der sogenannte Signal-In-Space-Error (SISE) geschätzt.

Eine Voraussage der Verteilung des SISE kann durch eine Gaussverteilung mit der kleinsten Standardabweichung dargestellt werden. Diese Voraussage wird als die bereits oben erwähnte Signal-In-Space-Accuracy (SISA) bezeichnet, die vom Bodensegment über die Satelliten des Raumsegments an die Nutzungssysteme verteilt wird. Mit der SISA kann die Differenz zwischen der aktuellen 4-dimensionalen Position (Orbit und Uhrzeit) eines Satelliten und der vorausgesagten 4-dimensionalen Position, die in einer Navigationsnachricht enthalten ist, beschrieben werden.

Die Schätzung des SISE ist allerdings ein fehlerträchtiger Prozess. Daher wird in der Regel angenommen, dass die Verteilung des aktuellen SISE um den Wert des geschätzten SISE mit einer Gaussverteilung mit der Standardabweichung beschrieben werden kann, die als die bereits oben erwähnte Signal-In-Space-Monitoring-Accuracy (SISMA) bezeichnet wird. SISMA ist also ein Maß für die Genauigkeit der Schätzung des SISE für einen Satelliten im Bodensegment und wird ebenfalls an die Nutzungssysteme vom Bodensegment aus über ausgewählte Satelliten des Raumsegments übertragen. Bei Galileo ist vorgesehen, die SISMA-Werte für die Satelliten etwa alle 30 Sekunden zu übertragen. Um das Integritätsrisiko möglichst zu verringern, wird für jeden Satelliten der jeweils größte SISMA-Wert von den in einer Meßperiode ermittelten SISMA-Werten übertragen. Ein großer SISMA-Wert steht hierbei für eine geringe Genauigkeit der Satellitenüberwachung durch das Bodensegment und spiegelt damit ein erhöhtes Integritätsrisiko für einen Nutzer wieder.

Eine detaillierte Beschreibung des Integritätskonzepts von Galileo findet sich in der Veröffentlichung "The Galileo Integrity Concept", V. Oehler, F. Luongo, J.-P. Boyero, R. Stalford, H.L. Trautenberg, J. Hahn, F. Amarillo, M. Crisci, B. Schlarmann, J.F. Flamand, ION GNSS 17th International Technical Meeting of the Satellite Division, 21.-24. Sept. 2004, Long Beach, CA.

Wie bereits oben erwähnt kann das Integritätsrisiko von einem Nutzungssystem selbst abgeschätzt werden, so dass dieses entscheiden kann, ob empfangene Navigationssignale zur Positionsbestimmung herangezogen werden, oder ob sie aufgrund eines zu hohen Integritätsrisikos besser außer acht gelassen werden. Für die Leistungsfähigkeit eines Nutzungssystems ist daher eine möglichst zuverlässige und genaue Integritätsrisikoabschätzung von besonderer Bedeutung.

Vor allem für sicherheitskritische Navigationsanwendungen wie beispielsweise die Flugnavigation ist eine zuverlässige und genaue Integritätsrisikoabschätzung vor großer Bedeutung. Beispielsweise beschreibt die EP 2 017 636 A1 eine Abbildung der in dem Galileo Integritätskonzept verwendeten Parameter auf die in einem SBAS (Satellite Based Augmentation System) verwendeten Parameter, um so für das Galileo System ein Integritätskonzept zu ermöglichen, welches auf dem für SBAS definierten standardisierten Schutzpegel basiert und damit den Anforderungen der Luftfahrtgemeinschaft entgegenkommt, die für das Galileo-System nach einem Integritätskonzept fragt, das identisch zu dem für SBAS verwendeten Konzept ist.

Aufgabe der vorliegenden Erfindung ist es, ein Verfahren und eine Vorrichtung zur Abschätzung des Integritätsrisikos in einem Satellitennavigationssystem vorzuschlagen.

Diese Aufgabe wird durch ein Verfahren zur Abschätzung des Integritätsrisikos in einem Satellitennavigationssystem von Anspruch 1 und eine entsprechende Vorrichtung mit den Merkmalen von Anspruch 7 erreicht. Weitere Ausgestaltungen der Erfindung sind Gegenstand der abhängigen Ansprüche.

Die Erfindung basiert darauf, dass das Integritätsrisiko durch Ermitteln des Maximums einer Integralfunktion zur Bestimmung des Integritätsrisikos bestimmt wird, und hierzu mehrere für die Integrität des Satellitennavigationssystems relevante und mittels Navigationssignalen über Satelliten an Nutzungssysteme verteilte Informationen wie SISA und SISMA verwendet werden. Das Maximum der Integralfunktion wird nun nach einem wesentlichen Gedanken der Erfindung ermittelt, indem zunächst Intervalle der Integrationsvariablen der Integralfunktion gebildet, dann das Maximum des Integritätsrisikos für jedes gebildete Intervall abgeschätzt und schließlich das Maximum über alle Intervalle als Abschätzung des Integritätsrisikos gebildet wird. Es wird also nicht eine herkömmliche Maximumsuchmethode für die Integralfunktion zur Bestimmung des Integritätsrisikos durchgeführt, was rechentechnisch sehr aufwendig ist, sondern das Maximum wird konservativ abgeschätzt. Durch die Intervallbildung kann die konservative Abschätzung gezielt beeinflusst werden, beispielsweise kann durch die Anzahl ausgewählter Intervalle genau bestimmt werden, wie viele Rechenschritte für die Abschätzung bzw. Berechnung des Integritätsrisikos notwendig sind, was für die Echtzeitfähigkeit eines auf der Erfindung basierenden Algorithmus von wesentlicher Bedeutung sein kann. Weiterhin kann durch die Wahl der Anzahl der Intervalle der Rechenaufwand für die Abschätzung des Integritätsrisikos und die Genauigkeit verändert werden. Beispielsweise kann durch eine Erhöhung der Anzahl der Intervalle die Genauigkeit der Abschätzung verbessert werden, während bei einer Verkleinerung der Anzahl der Intervalle der Rechenaufwand reduziert werden kann. Bei normalen Suchalgorithmen für das Maximum wird dagegen die gefundene Abschätzung für das Maximum größer, wenn die Anzahl der Suchschritte erhöht wird. Es wird also mit der Erhöhung der Suchschritte und der damit verbundenen Erhöhung der Anzahl an Rechenoperationen nur das Risiko reduziert, dass nicht das Maximum gefunden und ein zu kleiner Wert ermittelt wurde. Dagegen kann nicht wie bei der vorliegenden Erfindung durch die Erhöhung des Rechenaufwands auch die Genauigkeit der Abschätzung des Integritätsrisikos erhöht werden.

Die Erfindung betrifft nun gemäß einer Ausführungsform ein Verfahren zur Abschätzung des Integritätsrisikos in einem Satellitennavigationssystem, in dem mehrere für die Integrität des Satellitennavigationssystems relevante Informationen wie beispielsweise SISA und SISMA bei Galileo mittels Navigationssignalen über Satelliten an Nutzungssysteme verteilt werden, wobei die Informationen von einem Nutzungssystem zur Abschätzung des Integritätsrisikos verwendet werden, indem das Maximum einer Integralfunktion zur Bestimmung des Integritätsrisikos wie folgt ermittelt wird:

- Bilden von Intervallen der Integrationsvariablen der Integralfunktion,
- Abschätzen des Maximums des Integritätsrisikos für jedes gebildete Intervall und
- Bestimmen des Maximums über alle Intervalle anhand der für jedes gebildete Intervall abgeschätzten Maxima als Abschätzung des Integritätsrisikos.

Mit diesem Verfahren kann auf effiziente Weise das Integritätsrisiko von beispielsweise einem Nutzungssystem abgeschätzt werden. Vor allem kann dieses Verfahren in Form eines Algorithmus in ein Nutzungssystem implementiert werden, wodurch die Navigation bzw. Positionsbestimmung mit dem Nutzungssystem verbessert werden kann, beispielsweise indem Einstellmöglichkeiten für die Abschätzung des Integritätsrisikos für einen Nutzer ermöglicht werden, mit denen der Verfahrensablauf beeinflusst werden kann, insbesondere durch die Einstellung des Bildens von Intervallen.

Das Abschätzen des Maximums des Integritätsrisikos für jedes gebildete Intervall kann insbesondere das Berechnen einer oberen Grenze für das Integritätsrisiko in jedem Intervall aufweisen. Die obere Grenze für das Integritätsrisiko kann hierbei gemäß einer Formel berechnet werden, die auch für die Berechnung einer oberen Grenze für das Integritätsrisiko über den gesamten Bereich der Integrationsvariablen verwendet wird, angepasst an das entsprechende Intervall.

Das Bilden von Intervallen der Integrationsvariablen der Integralfunktion weist insbesondere das Aufteilen des Intervalls [$\xi_{min}$, $\xi_{max}$] in n gleich große Intervalle gemäß der folgenden Formel auf:

$$\left[\xi_{min} + \frac{i-1}{n}\left(\xi_{max} - \xi_{min}\right), \xi_{min} + \frac{i}{n}\left(\xi_{max} - \xi_{min}\right)\right]$$
,

wobei $\xi$ die Integrationsvariable ist, und in jedem Intervall kann dann die obere Grenze für das Integritätsrisikogemäß der folgenden Formel berechnet werden:

$$P_{MD}\left(\xi_{min} + \frac{i-1}{n}\left(\xi_{max} - \xi_{min}\right), \sigma_{SISA}, \sigma_{SISMA}\right) I\left(\xi_{min} + \frac{i}{n}\left(\xi_{max} - \xi_{min}\right), \sigma_V, k_V, l_V\right)$$

wobei $P_{MD}$ die Wahrscheinlichkeit des befürchteten Ereignisses einer Fehldetektion und I die Wahrscheinlichkeit des befürchteten Ereignisses eines Einflusses auf die Anwendung angeben. Die vorgenannte Formel ist die Formel, die normalerweise zur Berechnung einer oberen Grenze für das Integritätsrisiko über den gesamten Bereich der Integrationsvariablen beim Integritätskonzept von Galileo verwendet wird und speziell an die einzelnen Intervalle und deren Grenzen angepasst ist.

Das Bestimmen des Maximums über alle Intervalle weist insbesondere das Ermitteln des Maximums der für alle Intervalle berechneten oberen Grenzen und das Festlegen des so bestimmten Maximums als Abschätzung des Integritätsrisikos auf. Mit anderen Worten wird also das Maximum aller ermittelten oberen Grenzen als Abschätzung des Integritätsrisikos bestimmt, was eine Vereinfachung der Integritätsrisikoabschätzung gegenüber einer herkömmlichen Maximumsuchmethode bei der Integralfunktion für die Berechnung des Integritätsrisikos darstellt, aufgrund seiner Abschätzung durch obere Grenzen aber zu praktikablen Ergebnissen bei vertret- und vor allem beeinflussbaren Rechenaufwand führt.

Gemäß einer weiteren Ausführungsform betrifft die Erfindung ein Computerprogramm zur Durchführung eines Verfahrens nach der Erfindung und wie vorstehend beschrieben, wenn das Computerprogramm auf einem Computer durchgeführt wird.

Ferner betrifft eine Ausführungsform der Erfindung einen Datenträger, auf dem das Computerprogramm nach der Erfindung und wie vorstehend beschrieben gespeichert ist. Beispielsweise kann der Datenträger eine Diskette, CDR, DVD, Speicherkarte oder dergleichen sein.

Eine weitere Ausführungsform der Erfindung betrifft eine Vorrichtung zur Abschätzung des Integritätsrisikos in einem Satellitennavigationssystem, in dem mehrere für die Integrität des Satellitennavigationssystems relevante Informationen wie beispielsweise SISA und SISMA bei Galileo mittels Navigationssignalen über Satelliten an Nutzungssysteme verteilt werden, wobei die Vorrichtung ausgebildet ist, die Informationen zur Abschätzung des Integritätsrisikos zu verwenden, indem das Maximum einer Integralfunktion zur Bestimmung des Integritätsrisikos wie folgt von der Vorrichtung ermittelt wird:

-   Bilden von Intervallen der Integrationsvariablen der Integralfunktion,
-   Abschätzen des Maximums des Integritätsrisikos für jedes gebildete Intervall und
-   Bestimmen des Maximums über alle Intervalle anhand der für jedes gebildete Intervall abgeschätzten Maxima als Abschätzung des Integritätsrisikos.

Die Vorrichtung kann vor allem zur Durchführung eines Verfahrens nach einem der Erfindung und wie oben beschrieben ausgebildet sein. Beispielsweise kann die Vorrichtung als integrierte Schaltung implementiert sein, insbesondere als ein ASIC oder PGA. Alternativ kann die Vorrichtung auch durch einen Prozessor implementiert sein, der durch ein in einem Speicher abgelegtes Programm derart konfiguriert wird, dass er die Berechnungsschritte gemäß dem Verfahren nach der Erfindung und wie oben erläutert ausführt.

Gemäß einer weiteren Ausführungsform der Erfindung ist ein Nutzungssystem für ein Satellitennavigationssystem vorgesehen, das zum Empfangen von Navigationssignalen des Satellitennavigationssystems ausgebildet ist und zur Durchführung eines Verfahrens nach der Erfindung und wie oben beschrieben konfiguriert ist. Das Nutzungssystem kann beispielsweise ein Navigationsgerät mit integrierten Empfänger für Navigationssignale oder ein Computer mit einem angeschlossenen Empfänger für Navigationssignale sein. Das Nutzungssystem kann auch durch ein Mobiltelefon, insbesondere ein sogenanntes Smartphone oder ein anderes mobiles elektronisches Gerät mit integriertem Empfänger für Navigationssignale von Satelliten sein. Für professionelle Anwendungen wie der Luftfahrt kann das Nutzungssystem auch als Module implementiert sein, das beispielsweise zum Einbau in ein Flugzeug ausgebildet ist.

Das Nutzungssystem kann sich ferner dadurch auszeichnen, dass es eine Vorrichtung nach der Erfindung und wie vorstehend beschrieben aufweist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

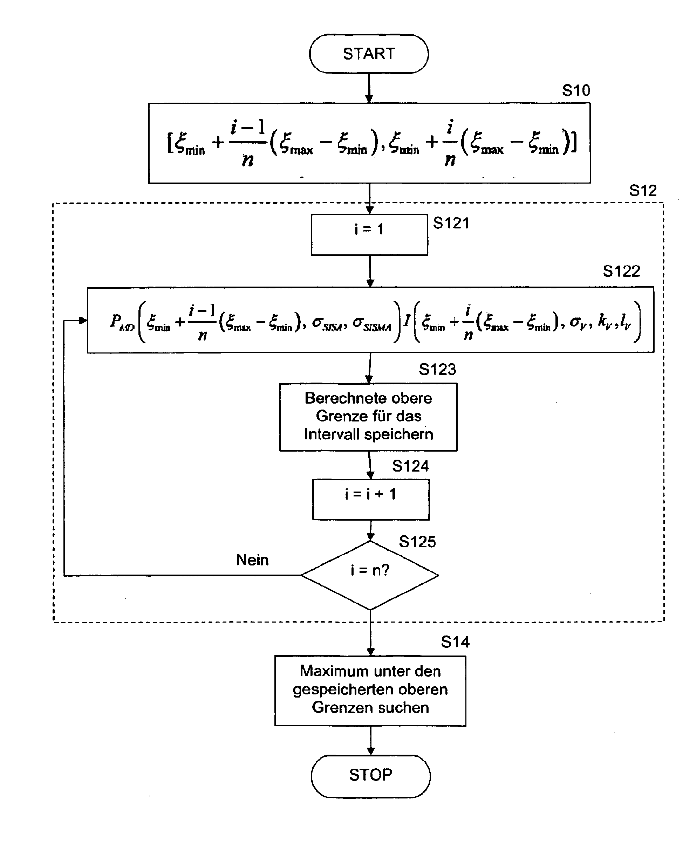

Die Zeichnungen zeigen in der einzigen Fig. ein Flussdiagramm eines Ausführungsbeispiels des Verfahrens zur Abschätzung des Integritätsrisikos in einem Satellitennavigationssystem gemäß der Erfindung.

Die vorliegende Erfindung geht von der Abschätzung des Integritätsrisikos aus, wie es in "Implementation and Testing of Galileo User Integrity Algorithms: New developments for the User Integrity Processing with Galileo" von F. Amarillo und D'Angelo, P., 4th ESA Workshop on Satellite Navigation User Equipment Technologies (NAVITEC'2008), 10.12.2008, ESTEC-ESA, Noordwjik, The Netherlands, erläutert wird. Danach kann bei Galileo das Integritätsrisiko $R_V$ als das Maximum der folgenden Integralfunktion berechnet werden:

$$R_V = \int_{\xi_{\min}}^{\xi_{\max}} P_{OC} \; pdf_{OC}(\xi) \, P_{MD}(\xi, \sigma_{SISA}, \sigma_{SISMA}) \, I(\xi, \sigma_V, k_V, l_V) \, d\xi$$

wobei

$P_{OC}$ die Wahrscheinlichkeit für ein "Einzel-SIS" bei nicht-nominalen Bedingungen,

$pdf(\xi)$ die Wahrscheinlichkeitsdichtefunktion eines befürchteten Ereignisses bezüglich des Parameters $\xi$,

$P_{MD}(\xi, \sigma_{SISA}, \sigma_{SISMA})$ die Wahrscheinlichkeit eines befürchteten Ereignisses einer Fehldetektion und

$I(\xi, \sigma_V, k_V, l_V)$ die Wahrscheinlichkeit eines befürchteten Ereignisses eines Einflusses auf die Anwendung bezeichnen.

Praktisch ist es jedoch schwierig, wenn nicht gar unmöglich, eine Wahrscheinlichkeitsdichtefunktion verbunden mit den nicht-nominalen Bedingungen aufzustellen. Rv kann jedoch wie folgt nach oben abgegrenzt werden:

$$R_V < \int_{\xi_{\min}}^{\xi_{\max}} P_{OC} \; pdf_{OC}(\xi) \max_{\xi_{\min} < \xi < \xi_{\max}} \{P_{MD}(\xi, \sigma_{SISA}, \sigma_{SISMA}) \, I(\xi, \sigma_V, k_V, l_V)\} \, d\xi$$

$$R_V < \max_{\xi_{\min} < \xi < \xi_{\max}} P_{OC} \{P_{MD}(\xi, \sigma_{SISA}, \sigma_{SISMA}) I(\xi, \sigma_V, k_V, l_V)\} \int_{\xi_{\min}}^{\xi_{\max}} pdf_{OC}(\xi) \, d\xi$$

$$R_V < P_{OC} \max_{\xi_{\min} < \xi < \xi_{\max}} \{P_{MD}(\xi, \sigma_{SISA}, \sigma_{SISMA}) I(\xi, \sigma_V, k_V, l_V)\}$$

Eine obere Grenze für $R_V$ kann daher durch Berechnung von

$$\max_{\xi_{\min} < \xi < \xi_{\max}} \{P_{MD}(\xi, \sigma_{SISA}, \sigma_{SISMA}) I(\xi, \sigma_V, k_V, l_V)\}$$

ermittelt werden. Um diese Berechnung mit vertretbarem Aufwand durchführen zu können, wird nach der Erfindung wie folgt vorgegangen:

1. Zunächst wird das Intervall $[\xi_{\min}, \xi_{\max}]$ in n gleich große Intervalle nach der folgenden Formel aufgeteilt:

$$[\xi_{\min} + \frac{i-1}{n}(\xi_{\max} - \xi_{\min}), \xi_{\min} + \frac{i}{n}(\xi_{\max} - \xi_{\min})],$$

wobei n die Anzahl der Intervalle angibt und für i gilt: i = 1, 2 ... n.

2. In jedem so gebildeten Intervall wird nun die obere Grenze

$$\max_{\xi_{\min} + \frac{i-1}{n}(\xi_{\max} - \xi_{\min}) < \xi < \xi_{\min} + \frac{i}{n}(\xi_{\max} - \xi_{\min})} \left\{ P_{MD}(\xi, \sigma_{SISA}, \sigma_{SISMA}) I(\xi, \sigma_V, k_V, l_V) \right\}$$

für $R_V$ für das jeweilige Intervall konservativ durch die folgende Gleichung abgeschätzt:

$$R_{Vi} < $$

$$P_{MD}\left( \xi_{\min} + \frac{i-1}{n}(\xi_{\max} - \xi_{\min}), \sigma_{SISA}, \sigma_{SISMA} \right) I\left( \xi_{\min} + \frac{i}{n}(\xi_{\max} - \xi_{\min}), \sigma_V, k_V, l_V \right)$$

Insgesamt werden so n konservativ abgeschätzte obere Grenzen $R_{Vi}$ gebildet.

3. Anschließend wird aus den so abgeschätzten n oberen Grenzen $R_{Vi}$ für die n Intervalle das Maximum über alle n Intervalle ermittelt, was einen geringeren Rechenaufwand als eine aufwendige Maximumsuchmethode für die Integralfunktion $R_V$ erfordert und zudem den Vorteil besitzt, dass durch die Wahl der Anzahl der Intervalle die Abschätzung des Integritätsrisikos beeinflusst werden kann hinsichtlich Rechengenauigkeit und Rechengeschwindigkeit. Werden wenige Intervalle gebildet, steigt die Rechengeschwindigkeit, während bei Bildung von mehr Intervallen die Rechengeschwindigkeit zwar sinkt, dafür aber die Genauigkeit der Abschätzung steigt.

Bei einer normalen Maximumssuche kann es vorkommen, dass das gefundene Maximum unterhalb des Maximums liegt. Bei der erfindungsgemäßen Suche wird aufgrund der Eigenschaften von $P_{MD}$ und $I$ hingegen sichergestellt, dass eine obere Schranke für das Maximum gefunden wird.

Die obigen Schritte können in ganz oder auch nur teilweise Soft- oder Hardware implementiert werden. Typischerweise werden sie in Form eines Algorithmus implementiert, der in ein Nutzungssystem implementiert wird. Der Algorithmus kann beispielsweise in ein Navigations- oder Positionsbestimmungsprogramm integriert sein.

Die einzige Fig. zeigt ein Flussdiagramm eines derartigen Algorithmus. Nach dem Start des Algorithmus wird in Schritt S10 der Bereich der Integrationsvariablen $\xi$ in gleich große Intervalle gemäß der bereits oben erwähnten Formel aufgeteilt. Anschließend wird im Schritt S12 für jedes Intervall eine obere Grenze wie oben erläutert abgeschätzt. Hierzu setzt der Algorithmus zunächst im Schritt S121 den Intervallzähler i auf 1. Im folgenden Schritt S122 wird dann für das erste Intervall die obere Grenze gemäß der bereits oben unter 2. beschriebenen Gleichung abgeschätzt. Im darauffolgenden Schritt S123 wird die so berechnete bzw. abgeschätzte obere Grenze gespeichert. Im nächsten Schritt S124 wird der Intervallzähler inkrementiert, um schließlich im Schritt S125 mit der Anzahl n von Intervallen verglichen zu werden. Ist der Intervallzähler i größer als die Anzahl n, wird mit Schritt S14 fortgefahren, andernfalls in den Schritt S122 verzeigt, um nochmals die Schritte S122-S124 für ein weiteres Intervall zu durchlaufen. Im Schritt S14, wenn für alle n Intervalle obere Grenzen berechnet wurden, wird unter den gespeicherten oberen Grenzen das Maximum ermittelt und als Abschätzung des Integritätsrisikos verwendet.

**Patentansprüche**

1. Verfahren zur Abschätzung des Integritätsrisikos in einem Satellitennavigationssystem, in dem mehrere für die Integrität des Satellitennavigationssystems relevante Informationen (SISA, SISMA) mittels Navigationssignalen über Satelliten an Nutzungssysteme verteilt werden, **dadurch gekennzeichnet, dass** die Informationen von einem Nutzungssystem zur Abschätzung des Integritätsrisikos ($R_V$) verwendet werden, indem das Maximum einer Integralfunktion zur Bestimmung des Integritätsrisikos wie folgt ermittelt wird:

- Bilden von Intervallen der Integrationsvariablen der Integralfunktion (S10),
- Abschätzen des Maximums des Integritätsrisikos für jedes gebildete Intervall (S12) und
- Bestimmen des Maximums über alle Intervalle anhand der für jedes gebildete Intervall abgeschätzten Maxima als Abschätzung des Integritätsrisikos (S14).

2. Verfahren nach Anspruch 1,
**dadurch gekennzeichnet, dass**
das Abschätzen des Maximums des Integritätsrisikos für jedes gebildete Intervall das Berechnen einer oberen Grenze für das Integritätsrisiko in jedem Intervall aufweist.

3. Verfahren nach Anspruch 2,
**dadurch gekennzeichnet, dass**
das Bilden von Intervallen der Integrationsvariablen der Integralfunktion das Aufteilen des Intervalls $[\xi_{min}, \xi_{max}]$ in n gleich große Intervalle gemäß der folgenden Formel aufweist:

$$[\xi_{min} + \frac{i-1}{n}(\xi_{max} - \xi_{min}), \xi_{min} + \frac{i}{n}(\xi_{max} - \xi_{min})],$$

wobei $\xi$ die Integrationsvariable ist, und in jedem Intervall die obere Grenze für das Integritätsrisikogemäß der folgenden Formel berechnet wird:

$$P_{MD}\left(\xi_{min} + \frac{i-1}{n}(\xi_{max} - \xi_{min}), \sigma_{SISA}, \sigma_{SISMA}\right) I\left(\xi_{min} + \frac{i}{n}(\xi_{max} - \xi_{min}), \sigma_V, k_V, l_V\right)$$

wobei $P_{MD}$ die Wahrscheinlichkeit des befürchteten Ereignisses einer Fehldetektion und I die Wahrscheinlichkeit des befürchteten Ereignisses eines Einflusses auf die Anwendung angeben.

4. Verfahren nach Anspruch 2 oder 3,
**dadurch gekennzeichnet, dass**
das Bestimmen des Maximums über alle Intervalle das Ermitteln des Maximums der für alle Intervalle berechneten oberen Grenzen und Festlegen des so bestimmten Maximums als Abschätzung des Integritätsrisikos aufweist.

5. Computerprogramm zur Durchführung eines Verfahrens nach einem der Ansprüche 1 bis 4, wenn das Computerprogramm auf einem Computer durchgeführt wird.

6. Datenträger, auf dem das Computerprogramm nach Anspruch 5 gespeichert ist.

7. Vorrichtung zur Abschätzung des Integritätsrisikos in einem Satellitennavigationssystem, in dem mehrere für die Integrität des Satellitennavigationssystems relevante Informationen (SISA, SISMA) mittels Navigationssignalen über Satelliten an Nutzungssysteme verteilt werden, **dadurch gekennzeichnet,dass** die Vorrichtung ausgebildet ist, die Informationen zur Abschätzung des Integritätsrisikos ($R_V$) zu verwenden, indem das Maximum einer Integralfunktion zur Bestimmung des Integritätsrisikos wie folgt von der Vorrichtung ermittelt wird:

- Bilden von Intervallen der Integrationsvariablen der Integralfunktion,
- Abschätzen des Maximums des Integritätsrisikos für jedes gebildete Intervall und
- Bestimmen des Maximums über alle Intervalle anhand der für jedes gebildete Intervall abgeschätzten Maxima als Abschätzung des Integritätsrisikos.

8. Vorrichtung nach Anspruch 7
**dadurch gekennzeichnet, dass**

sie ferner ausgebildet ist zur Durchführung eines Verfahrens nach einem der Ansprüche 2-4.

9. Vorrichtung nach Anspruch 7 oder 8,
   **dadurch gekennzeichnet, dass**
   sie als integrierte Schaltung implementiert ist, insbesondere als ein ASIC oder PGA.

10. Nutzungssystem für ein Satellitennavigationssystem, das zum
    Empfangen von Navigationssignalen des Satellitennavigationssystems ausgebildet ist und zur Durchführung eines
    Verfahrens nach einem der Ansprüche 1-4 konfiguriert ist.

11. Nutzungssystem nach Anspruch 10,
    **dadurch gekennzeichnet, dass**
    es eine Vorrichtung nach einem der Ansprüche 7-9 aufweist.

## Claims

1. Method for assessing the integrity risk in a satellite navigation system, in which a plurality of pieces of information
   (SISA, SISMA) that are relevant to the integrity of the satellite navigation system are distributed to utilizing systems
   by means of navigation signals via satellites, **characterized in that** the information is used by a utilizing system to
   assess the integrity risk ($R_v$) by ascertaining the maximum of an integral function for determining the integrity risk
   as follows:

   - ranges are formed for the integration variables of the integral function (S10),
   - the maximum integrity risk is assessed for each range formed (S12), and
   - the maximum over all ranges is determined by using the maxima assessed for each range formed as an
   assessment of the integrity risk (S14).

2. Method according to Claim 1,
   **characterized in that**
   the assessment of the maximum integrity risk for each range formed has an upper limit calculated for the integrity
   risk in each range.

3. Method according to Claim 2,
   **characterized in that**
   the formation of ranges for the integration variables of the integral function has the range [$\zeta_{min}$, $\zeta_{max}$] split into n
   ranges of equal size on the basis of the following formula:

   $$[\zeta_{min} + \frac{i-1}{n} \ (\zeta_{max} - \zeta_{min} + \frac{i}{n}$$

   ($\zeta_{max}$ - $\zeta_{min)]}$, , where $\zeta$ is the integration variable, and the upper limit for the integrity risk in each range is calculated
   on the basis of the following formula:

   $$P_{MD}\left(\zeta_{min} + \frac{i-1}{n} \ (\zeta_{max} - \zeta_{min}), \sigma_{SISA}, \sigma_{SISMA}\right) \ I \ \left(\zeta_{mm} + \frac{i}{n} (\zeta_{max} - \zeta_{min}), \ \sigma_v, k_v, l_v\right),$$

   where $P_{MD}$ indicates the probability of the feared event of a misdetection and I indicates the probability of the feared
   event of an influence on the application.

4. Method according to Claim 2 or 3,
   **characterized in that**
   the determination of the maximum over all ranges has the maximum ascertained for the upper limits calculated for
   all ranges and has the maximum determined in this manner stipulated as an assessment of the integrity risk.

5. Computer program for carrying out a method according to one of Claims 1 to 4 when the computer program is executed on a computer.

6. Data storage medium which stores the computer program according to Claim 5.

7. Apparatus for assessing the integrity risk in a satellite navigation system, in which a plurality of pieces of information (SISA, SISMA) that are relevant to the integrity of the satellite navigation system are distributed to utilizing systems by means of navigation signals via satellites, **characterized in that** the apparatus is designed to use the information to assess the integrity risk ($R_V$) by virtue of the apparatus ascertaining the maximum of an integral function for determining the integrity risk as follows:

  - ranges are formed for the integration variables of the integral function,
  - the maximum integrity risk is assessed for each range formed, and
  - the maximum over all ranges is determined by using the maxima assessed for each range formed as an assessment of the integrity risk.

8. Apparatus according to Claim 7,
   **characterized in that**
   it is also designed to carry out a method according to one of Claims 2-4.

9. Apparatus according to Claim 7 or 8,
   **characterized in that**
   it is implemented as an integrated circuit, particularly as an ASIC or PGA.

10. Utilizing system for a satellite navigation system which is designed to receive navigation signals from the satellite navigation system and is configured to carry out a method according to one of Claims 1-4.

11. Utilizing system according to Claim 10, **characterized in that**
    it has an apparatus according to one of Claims 7-9.


**Revendications**

1. Procédé d'estimation du risque d'intégrité dans un système de navigation par satellite, dans lequel plusieurs informations pertinentes pour l'intégrité du système de navigation par satellite (SISA, SISMA) sont distribuées au moyen de signaux de navigation à des systèmes utilisateurs par l'intermédiaire de satellites, **caractérisé en ce que** les informations sont utilisées par un système utilisateur afin d'estimer le risque d'intégrité ($R_V$) en obtenant le maximum d'une fonction intégrale de la manière suivante pour déterminer le risque d'intégrité :

  - établir des intervalles des variables d'intégration de la fonction intégrale (S10),
  - estimer le maximum du risque d'intégrité pour chaque intervalle établi (S12), et
  - déterminer le maximum sur tous les intervalles sur la base des maxima estimés pour chaque intervalle établi en tant qu'estimation du risque d'intégrité (S14).

2. Procédé selon la revendication 1, **caractérisé en ce que** l'estimation du maximum du risque d'intégrité pour chaque intervalle établi comprend le calcul d'une limite supérieure du risque d'intégrité dans chaque intervalle.

3. Procédé selon la revendication 2, **caractérisé en ce que** l'établissement d'intervalles des variables d'intégration de la fonction intégrale comprend la division de l'intervalle [$\xi_{min}$, $\xi_{max}$] en n intervalles égaux conformément à la formule suivante :

$$[\xi_{min} + \frac{i-1}{n}(\xi_{max} - \xi_{min}), \ \xi_{min} + \frac{i}{n}(\xi_{max} - \xi_{min})]$$

où $\xi$ est la variable d'intégration, et la limite supérieure du risque d'intégrité est calculée dans chaque intervalle conformément à la formule suivante :

$$P_{MD}\left(\xi_{min} + \frac{i-1}{n}(\xi_{max} - \xi_{min}), \sigma_{SISA}, \sigma_{SISMA}\right) I\left(\xi_{min} + \frac{i}{n}(\xi_{max} - \xi_{min}), \sigma_v, k_v, l_v\right)$$

où $P_{MD}$ est la probabilité de l'événement appréhendé de fausse détection et I est la probabilité de l'événement appréhendé d'influence sur l'application.

4. Procédé selon la revendication 2 ou 3, **caractérisé en ce que** la détermination du maximum sur tous les intervalles comprend l'obtention du maximum de la limite supérieure calculée pour tous les intervalles et le fait de fixer le maximum ainsi déterminé en tant qu'estimation du risque d'intégrité.

5. Programme informatique destiné à mettre en oeuvre un procédé selon l'une quelconque des revendications 1 à 4, lorsque le programme informatique est exécuté sur un ordinateur.

6. Support de données sur lequel est stocké le programme informatique selon la revendication 5.

7. Dispositif destiné à estimer le risque d'intégrité dans un système de navigation par satellite, dans lequel plusieurs informations pertinentes pour l'intégrité du système de navigation par satellite (SISA, SISMA) sont distribuées au moyen de signaux de navigation à des systèmes utilisateurs par l'intermédiaire des satellites, **caractérisé en ce que** le dispositif est conçu pour utiliser les informations afin d'estimer le risque d'intégrité ($R_v$), en faisant en sorte que le maximum d'une fonction intégrale soit obtenu de la manière suivante par le dispositif pour déterminer le risque d'intégrité :

   - établir des intervalles des variables d'intégration de la fonction intégrale,
   - estimer le maximum du risque d'intégrité pour chaque intervalle établi, et
   - déterminer le maximum sur tous les intervalles sur la base des maxima estimés pour chaque intervalle établi en tant qu'estimation du risque d'intégrité (S14).

8. Dispositif selon la revendication 7, **caractérisé en ce qu'**il est en outre conçu pour mettre en oeuvre un procédé selon l'une quelconque des revendications 2 à 4.

9. Dispositif selon la revendication 7 ou 8, **caractérisé en ce qu'**il est mis en oeuvre sous la forme d'un circuit intégré, notamment sous la forme d'un circuit ASIC ou PGA.

10. Système utilisateur pour système de navigation par satellite qui est conçu pour recevoir des signaux de navigation du système de navigation par satellite et qui est configuré pour mettre en oeuvre un procédé selon l'une quelconque des revendications 1 à 4.

11. Système utilisateur selon la revendication 10, **caractérisé en ce qu'**il comprend un dispositif selon l'une quelconque des revendications 7 à 9.

START

S10

$$[\xi_{min} + \frac{i-1}{n}(\xi_{max} - \xi_{min}), \xi_{min} + \frac{i}{n}(\xi_{max} - \xi_{min})]$$

S12

$i = 1$   S121

S122

$$P_{AD}\left(\xi_{min} + \frac{i-1}{n}(\xi_{max} - \xi_{min}), \sigma_{SISA}, \sigma_{SISMA}\right)I\left(\xi_{min} + \frac{i}{n}(\xi_{max} - \xi_{min}), \sigma_V, k_V, l_V\right)$$

S123

Berechnete obere
Grenze für das
Intervall speichern

S124

$i = i + 1$

S125

Nein — $i = n?$

S14

Maximum unter den
gespeicherten oberen
Grenzen suchen

STOP

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2017636 A1

**In der Beschreibung aufgeführte Nicht-Patentliteratur**

- **V. OEHLER ; F. LUONGO ; J.-P. BOYERO ; R. STALFORD ; H.L. TRAUTENBERG ; J. HAHN ; F. AMARILLO ; M. CRISCI ; B. SCHLARMANN ; J.F. FLAMAND.** The Galileo Integrity Concept. *ION GNSS 17th International Technical Meeting of the Satellite Division,* 21. September 2004

- **F. AMARILLO ; D'ANGELO, P.** Implementation and Testing of Galileo User Integrity Algorithms: New developments for the User Integrity Processing with Galileo. *4th ESA Workshop on Satellite Navigation User Equipment Technologies (NAVITEC'2008,* 12. Oktober 2008